# EUROPÄISCHE PATENTSCHRIFT

(11) **EP 4 471 244 B1**
(45) Veröffentlichungstag und Bekanntmachung des Hinweises auf die Patenterteilung: **30.07.2025**
(21) Anmeldenummer: 23176481.2
(22) Anmeldetag: 31.05.2023
(51) Int. Cl.: E05F 15/619, E05F 15/63

(54) **ANTRIEBSVORRICHTUNG ZUM BEWEGEN EINES BEWEGBAREN TEILS EINES MÖBELS UND MÖBEL MIT EINER SOLCHEN ANTRIEBSVORRICHTUNG**
DRIVE DEVICE FOR MOVING A MOVABLE PART OF A PIECE OF FURNITURE AND PIECE OF FURNITURE WITH SUCH A DRIVE DEVICE
DISPOSITIF D'ENTRAÎNEMENT POUR DÉPLACER UNE PARTIE MOBILE D'UN MEUBLE ET MEUBLE COMPRENANT UN TEL DISPOSITIF D'ENTRAÎNEMENT

(43) Veröffentlichungstag der Anmeldung: 04.12.2024
(73) Patentinhaber: FLAP Competence Center kft, 1184 Budapest (HU)
(72) Erfinder: BENDEFY, András Gábor, 1122 Budapest (HU)
(74) Vertreter: Neumann Müller Oberwalleney Patentanwälte PartG mbB

(56) Entgegenhaltungen:
- EP-A2- 2 660 544
- KR-A- 20070 111 856
- US-A1- 2006 053 916

## Beschreibung

Die vorliegende Erfindung betrifft eine Antriebsvorrichtung zum Bewegen eines bewegbaren Teils eines Möbels sowie ein Möbel mit einer solchen Antriebsvorrichtung.

Möbel können offen, z. B. als Regal, oder zumindest teilweise geschlossen ausgeführt sein, wobei ein bewegliches Teil das Öffnen und Schließen des Möbels ermöglicht. Als bewegliche Teile kommen insbesondere Türen, Klappen und Schubladen mit verschließbaren Fronten in Betracht. Aus Komfortgründen können die beweglichen Teile motorisch zwischen einer Schließ- und einer Öffnungsstellung bewegbar sein.

Aus der EP 2 660 544 A2 ist eine Antriebsvorrichtung für eine Tür eines Kühlgerätes bekannt. Eine gerade Zahnstange kann entlang einer Bewegungsachse verschoben werden. Durch die Bewegung der Zahnstange wird ein ortsfestes Zahnrad, das mit der Zahnstange kämmt und einen konstanten Grundkreisdurchmesser aufweist, drehend angetrieben. Das Zahnrad kämmt zudem mit einem schwenkbar befestigten Schwenkhebel, an dem die Tür des Kühlgerätes befestigt ist, sodass durch Drehung des Zahnrades der Schwenkhebel ausschwenkt. Auch US 2006/053916 A1 und KR 2007 0111856 A offenbaren jeweils eine Antriebsvorrichtung, bei der ein ortsfestes Zahnrad mit einer Zahnstange kämmt, so dass ein bewegbares Teil gegenüber einem feststehenden Teil ausgeschwenkt wird.

Der Erfindung liegt die Aufgabe zu Grunde, eine Antriebsvorrichtung zum Bewegen eines bewegbaren Teils eines Möbels bereitzustellen, dass einen variablen Antrieb des bewegbaren Teils des Möbels ermöglicht. Ferner liegt der Erfindung die Aufgabe zu Grunde, ein Möbel mit einer solchen Antriebsvorrichtung vorzuschlagen.

Zur Lösung der Aufgabe wird eine Antriebsvorrichtung zum Bewegen eines bewegbaren Teils eines Möbels vorgeschlagen, umfassend: ein Gehäuse, das mit einem Korpus des Möbels verbindbar ist; einen Aktuator, der mit dem Gehäuse verbunden ist; eine erste Zahnstange, die von dem Aktuator entlang einer Bewegungsachse zwischen einer ersten Endposition und einer zweiten Endposition bewegbar ist; eine zweite Zahnstange, die fest mit dem Gehäuse verbunden ist; und ein verzahntes Stellelement, das mit der ersten Zahnstange und der zweiten Zahnstange in Eingriff steht sowie mit dem bewegbaren Teil des Möbels verbindbar ist.

In einer möglichen Ausführungsform kann das verzahntes Stellelement zwischen der ersten Zahnstange und der zweiten Zahnstange entlang einer Stellspur bewegbar gelagert sein. Die Stellspur kann einen von einer Geraden abweichenden Verlauf aufweisen.

In einer weiteren möglichen Ausführungsform kann eine resultierende Kontaktkraft zwischen der ersten Zahnstange und dem verzahnten Stellelement in Richtung einer ersten Kontaktkraftlinie gerichtet sein. Der Winkel zwischen der ersten Kontaktkraftlinie und der Bewegungsachse kann in Abhängigkeit der Position der ersten Zahnstange entlang der Bewegungsachse variabel sein.

Ein erster Positionsbereich der ersten Zahnstange kann einseitig durch eine Positionierung der ersten Zahnstange in der ersten Endposition begrenzt sein. Der Winkel zwischen der ersten Kontaktkraftlinie und der Bewegungsachse in dem ersten Positionsbereich kann mit zunehmender Entfernung der ersten Zahnstange von der ersten Endposition zunehmen. Die Zunahme des Winkels zwischen der ersten Kontaktkraftlinie und der Bewegungsachse kann im ersten Positionsbereich insbesondere progressiv sein.

Alternativ oder in Kombination kann ein zweiter Positionsbereich der ersten Zahnstange in einer Richtung von der ersten Endposition hinzu der zweiten Endposition hinter dem ersten Positionsbereich angeordnet sein. In dem zweiten Positionsbereich kann der Winkel zwischen der ersten Kontaktkraftlinie und der Bewegungsachse in dem zweiten Positionsbereich mit zunehmender Entfernung der ersten Zahnstange von der ersten Endposition abnehmen. Die Abnahme des Winkels zwischen der ersten Kontaktkraftlinie und der Bewegungsachse im zweiten Positionsbereich kann insbesondere degressiv sein.

In einer möglichen Ausführungsform kann ein Messzahnrad drehbar an dem Gehäuse gelagert sein und mit einem Messabschnitt der Verzahnung der ersten Zahnstange in Eingriff sein. Der Messabschnitt kann als gerade Zahnstange ausgeführt sein. Das Messzahnrad kann einen konstanten Grundkreisdurchmesser aufweisen. Das Messzahnrad kann zur Erfassung der Position der ersten Zahnstange ausgestaltet sein.

In einer möglichen Ausführungsform kann eine Gewindestange von dem Aktuator um eine Rotationsachse drehbar sein. Ein Gewindeelement kann mit einem Gegengewinde in ein Gewinde der Gewindestange eingreifen, sodass bei Drehung der Gewindestange das Gewindeelement entlang der Bewegungsachse verschoben wird. Das Gewindeelement kann mit der ersten Zahnstange fest verbunden sein.

In einer weiteren möglichen Ausführungsform kann eine resultierende Kontaktkraft zwischen der zweiten Zahnstange und dem verzahnten Stellelement in Richtung einer zweiten Kontaktkraftlinie gerichtet sein. Der Winkel zwischen der zweiten Kontaktkraftlinie und der Bewegungsachse kann in Abhängigkeit der Position der ersten Zahnstange entlang der Bewegungsachse variieren.

Ein dritter Positionsbereich der ersten Zahnstange kann einerseits durch die Positionierung der ersten Zahnstange in der ersten Endposition und andererseits durch die Positionierung der ersten Zahnstange in der zweiten Endposition begrenzt sein. In dem dritten Positionsbereich kann der Winkel zwischen der zweiten Kontaktkraftlinie und der Bewegungsachse mit zunehmender Entfernung der ersten Zahnstange von der ersten Endposition zumindest abschnittsweise zunehmen. Die Zunahme des Winkels zwischen der zweiten Kontaktkraftlinie und der Bewegungsachse kann im dritten Positionsbereich insbesondere progressiv sein.

In einer weiteren möglichen Ausführungsform kann das verzahnte Stellelement einen ersten verzahnten Außenkonturabschnitt und einen zweiten verzahnten Außenkonturabschnitt aufweisen. Das verzahnte Stellelement kann über den ersten verzahnten Außenkonturabschnitt mit der ersten Zahnstange und über den zweiten verzahnten Außenkonturabschnitt mit der zweiten Zahnstange in Eingriff stehen.

Das verzahnte Stellelement kann einen Verbindungszapfen aufweisen. Der Verbindungszapfen kann sich quer, insbesondere orthogonal, zu der Bewegungsachse erstrecken. Das verzahnte Stellelement kann über den Verbindungszapfen mit dem bewegbaren Teil des Möbels kinematisch verbindbar sein.

Der Verbindungszapfen kann insbesondere in einem Schlitz des Gehäuses geführt sein. Bei Bewegung der ersten Zahnstange entlang der Bewegungsachse zwischen einer ersten Endposition und einer zweiten Endposition kann sich der Verbindungszapfen entlang der Stellspur bewegen,

Zur Lösung der Aufgabe wird ferner ein Möbel vorgeschlagen, umfassend: einen Korpus, ein relativ zu dem Korpus bewegbares Teil, einen Stellarm, und eine Antriebsvorrichtung in einer zuvor beschriebenen Ausführung, wobei das Gehäuse mit dem Korpus verbunden ist; und das verzahnte Stellelement über den Stellarm mit dem bewegbaren Teil verbunden ist.

Nachfolgend wird anhand der Figurenzeichnungen ein Ausführungsbeispiel einer erfindungsgemäßen Antriebsvorrichtung erläutert. Hierin zeigt:
- Figur 1: eine perspektivische Ansicht einer Antriebsvorrichtung zum Bewegen eines bewegbaren Teils eines Möbels in einer erfindungsgemäßen Ausführungsform;
- Figur 2: eine Seitenansicht der Antriebsvorrichtung aus Figur 1 ohne das Abdeckelement; wobei die erste Zahnstange in der ersten Endposition angeordnet ist;
- Figur 3: die Ansicht aus Figur 2; wobei die erste Zahnstange in einer ersten Zwischenposition angeordnet ist;
- Figur 4: die Ansicht aus Figur 2; wobei die erste Zahnstange in einer zweiten Zwischenposition angeordnet ist;
- Figur 5: die Ansicht aus Figur 2; wobei die erste Zahnstange in einer dritten Zwischenposition angeordnet ist;
- Figur 6: die Ansicht aus Figur 2; wobei die erste Zahnstange in der zweiten Endposition angeordnet ist; und
- Figur 7: eine vergrößerte Ansicht des Details VII aus Figur 3.

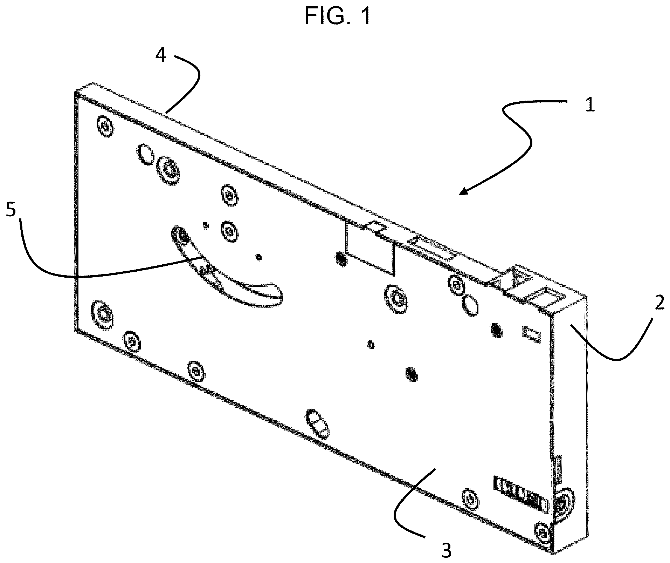

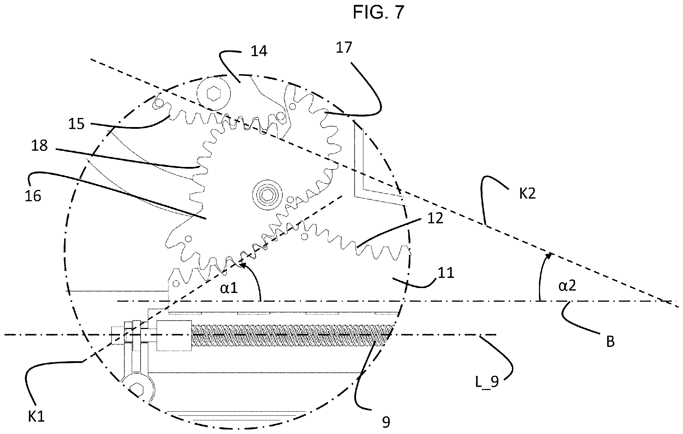

In den Figuren 1 bis 7, die nachfolgend gemeinsam beschrieben werden, ist eine Antriebsvorrichtung 1 zum Bewegen eines bewegbaren Teils eines Möbels gezeigt. Die Antriebsvorrichtung 1 umfasst ein Gehäuse 2, das mit einer Seitenwand eines nicht dargestellten Möbels verbindbar ist. Auch das bewegbare Teil des Möbels ist im vorliegenden Fall nicht dargestellt. Es versteht sich aber für den Fachmann, dass es sich dabei um eine Tür, eine Klappe, einen Deckel oder ähnliche Elemente handelt, die das Innere des Möbels wahlweise freigeben oder verschließen können. Die Antriebsvorrichtung 1 ist über einen nicht dargestellten Stellarm mit dem bewegbaren Teil des Möbels verbunden.

Zwischen der Seitenwand des Möbels und dem Gehäuse 2 kann insbesondere einen Federkraftspeicher angeordnet sein, mittels dem der Stellarm mit Federkraft beaufschlagt werden kann. Das Gehäuse 2 kann somit mittelbar über den Federkraftspeicher mit der Seitenwand verbunden sein. Die Antriebsvorrichtung 1 kann in diesem Fall über den Federkraftspeicher und den Stellarm mit dem bewegbaren Teil des Möbels verbunden sein.

Das Gehäuse 2 umfasst eine Vorderwand 3 und eine Rückwand 4. Die Vorderwand 3 ist lösbar mit einem Rahmen des Gehäuses 2 verbunden. Die Vorderwand 3 kann somit auch als Abdeckelement bezeichnet werden. Die Rückwand 4 ist integral mit einem Rahmen des Gehäuses 2 ausgestaltet.

In dem Gehäuse 2 der Antriebsvorrichtung 1 ist ein Elektromotor 7 gelagert, der über ein Winkelgetriebe 8 mit einer Gewindestange 9 antriebsmäßig verbunden ist. Der Elektromotor 7 ist über nicht dargestellte Kabel mit einer Energiequelle und einer Steuereinheit verbunden. Die Energiequelle und die Steuereinheit können dabei entweder in dem Gehäuse 2 oder außerhalb von diesem angeordnet sein.

Die Gewindestange 9 ist gerade ausgeführt und erstreckt sich entlang einer Rotationsachse L_9. Im vorliegenden Fall sind eine Rotorachse L_7 des Elektromotors 7 und die Rotationsachse L_9 quer, insbesondere orthogonal, zueinander angeordnet. Die Rotorachse L_7 und die Rotationsachse L_9 können dabei windschief zueinander angeordnet sein. Es versteht sich, dass die Rotorachse L_7 des Elektromotors 7 und die Rotationsachse L_9 auch parallel zueinander ausgerichtet sein können respektive identisch sein können, wobei auf ein Winkelgetriebe verzichtet werden könnte.

Die Gewindestange 9 ist mit einem Ende in dem Winkelgetriebe 8 gelagert und mit einem gegenüberliegenden Ende in dem Rahmen des Gehäuses 2. Auf der Gewindestange 9 ist ein Gewindeelement 10 angeordnet. Das Gewindeelement 10 umfasst eine Innenverzahnung, die mit einer Außenverzahnung der Gewindestange 9 in Eingriff ist. Durch Rotation der Gewindestange 9 kann das Gewindeelement 10 entlang der Rotationsachse L_9 zwischen einer ersten Endposition und einer zweiten Endposition verschoben werden.

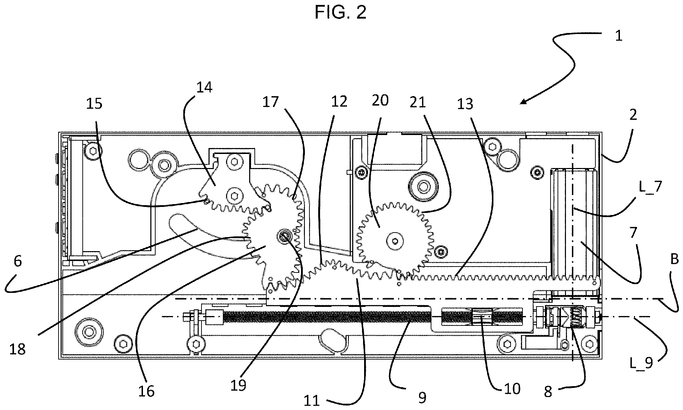

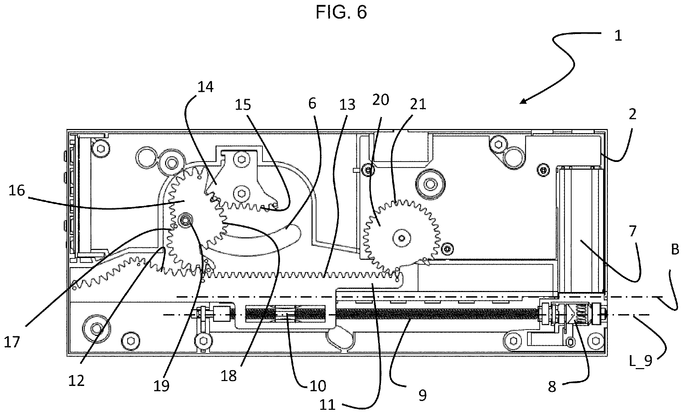

Das Gewindeelement 10 ist mit einer ersten Zahnstange 11 fest verbunden. Wird das Gewindeelement 10 aufgrund der Rotation der Gewindestange 9 entlang der Rotationsachse L_9 verschoben, wird somit ebenfalls die erste Zahnstange 11 in einer Bewegungsachse B verschoben. Die Bewegungsachse B und die Rotationsachse L_9 sind im vorliegenden Fall parallel zueinander angeordnet. Es ist aber auch denkbar, dass die Bewegungsachse B und die Rotationsachse L_9 identisch sind. Durch Rotation der Gewindestange 9 kann somit die Zahnstange 11 entlang der Bewegungsachse B zwischen einer ersten Endposition und einer zweiten Endposition verschoben werden. Die erste Zahnstange 11 ist in Figur 2 in der ersten Endposition und in Figur 6 in der zweiten Endposition gezeigt.

Die erste Zahnstange 11 weist einen ersten verzahnten Abschnitt und einen zweiten verzahnten Abschnitt auf. Die erste Zahnstange 11 kämmt mit dem ersten verzahnten Abschnitt mit einem verzahnten Stellelement 16 und mit dem zweiten verzahnten Abschnitt mit einer Messverzahnung 21 eines Messzahnrades 20. Der erste verzahnte Abschnitt kann somit auch als Bewegungsverzahnung 12 bezeichnet werden und der zweite verzahnte Abschnitt 13 als Messverzahnung.

Die Bewegungsverzahnung 12 weist eine von gerade abweichende Form auf. Die Zahnköpfe und die Zahnfüße der einzelnen Zähne der Bewegungsverzahnung 12 liegen somit jeweils auf einer von gerade abweichenden Bahn respektive auf einer Kurve. Es versteht sich, dass die Kurven der Zahnköpfe und der Zahnfüße nicht exakt identisch sein müssen. Die Kurve respektive die Kurven weisen jeweils aus Sicht der ersten Zahnstange 11 einen konkaven Anfangsabschnitt und einen konkaven Endabschnitt auf, die über einen konvexen Zwischenabschnitt miteinander verbunden sind.

Die Kurve respektive die Kurven lassen sich auch damit beschreiben, dass diese einen Anfangsabschnitt und einen Endabschnitt aufweist, die über einen Zwischenabschnitt miteinander verbunden sind, wobei die Kurve in Blickrichtung von der zweiten Endposition hin zu der ersten Endposition in dem Anfangsabschnitt und dem Endabschnitt einen größer werdenden Abstand von der Rotationsachse L_9 aufweist und in dem Zwischenabschnitt einen kleiner werdenden Abstand aufweist.

Alternativ lässt sich die von gerade abweichende Form der Bewegungsverzahnung 12 durch die Kurve beschreiben, die durch die Verbindung der Mittenpunkte der Flanken der einzelnen Zähne der Bewegungsverzahnung 12 gebildet ist. Ein Mittenpunkt der Flanken ist dabei der Punkt, der die Flanke in genau zwei gleich lange Teile teilt.

Die Kurve der Mittenpunkte weist eine von gerade abweichende Form auf. Die Kurve der Mittenpunkte weist aus Sicht der ersten Zahnstange 11 einen konkaven Anfangsabschnitt und einen konkaven Endabschnitt auf, die über einen konvexen Zwischenabschnitt miteinander verbunden sind.

Die Kurve der Mittenpunkte lässt sich auch damit beschreiben, dass diese einen Anfangsabschnitt und einen Endabschnitt aufweist, die über einen Zwischenabschnitt miteinander verbunden sind, wobei die Kurve in Blickrichtung von der zweiten Endposition hin zu der ersten Endposition in dem Anfangsabschnitt und dem Endabschnitt einen größer werdenden Abstand von der Rotationsachse L_9 aufweist und in dem Zwischenabschnitt einen kleiner werdenden Abstand aufweist.

Die Messverzahnung 13 ist als gerade Zahnstange ausgeführt. Die Messverzahnung 13 kämmt mit einer Verzahnung 21 des Messzahnrades 20. Die Messverzahnung 13 und die Verzahnung 21 des Messzahnrades 20 sind komplementär zueinander ausgeführt. Das Messzahnrad 20 ist an dem Gehäuse 2 um eine Drehachse drehbar gelagert. Die Verzahnung 21 ist über einen Teil des Umfangs des Messzahnrades 20 ausgeführt. Das Messzahnrad 20 ist mit einem nicht dargestellten Sensor zur Bestimmung des Drehwinkels des Messzahnrades 20 verbunden, beispielsweise mit einem Inkrementalsensor. Der Sensor kann über die Bestimmung des Drehwinkels des Messzahnrades 20 die Position der ersten Zahnstange 11 detektieren. Das entsprechende Signal gibt der Sensor an die Steuereinheit weiter.

Die Bewegungsverzahnung 12 und die Messverzahnung 13 können quer zu der Rotationsachse L_9 versetzt zueinander angeordnet sein oder in einer gemeinsamen Ebene liegen. Die Bewegungsverzahnung 12 und die Messverzahnung 13 können bezüglich der Rotationsachse L_9 axial überlappend zueinander angeordnet sein.

Das verzahnte Stellelement 16 weist einen ersten verzahnten Abschnitt und einen zweiten verzahnten Abschnitt auf. Der erste Abschnitt des Stellelements 16 ist mit der Bewegungsverzahnung 12 der ersten Zahnstange 11 in Eingriff und kann somit auch als Bewegungsverzahnung 17 bezeichnet werden. Die Bewegungsverzahnung 17 des Stellelements 16 ist komplementär zu der Bewegungsverzahnung 12 der ersten Zahnstange 11 ausgeführt. Die Bewegungsverzahnung 17 des Stellelements 16 und die Bewegungsverzahnung 12 der ersten Zahnstange 11 kämmen miteinander. Die Bewegungsverzahnungen 12 und 17 sind dabei so ausgeführt, dass bei Bewegung der ersten Zahnstange 11 in eine Richtung zumindest ein Zahn im Kontakt mit einem jeweiligen Gegenzahn steht. Mit anderen Worten ist die Profilüberdeckung des Verzahnungspaares der Bewegungsverzahnungen 12 und 17 an jeder Stelle größer oder gleich 1.

Der zweite verzahnte Abschnitt des Stellelements 16 ist mit einer Stützverzahnung 15 einer zweiten Zahnstange 14 in Eingriff und kann somit auch als Stützverzahnung 18 bezeichnet werden. Die zweite Zahnstange 14 fest mit dem Gehäuse 2 verbunden oder mit diesem integral ausgestaltet.

Die Stützverzahnung 15 weist eine von gerade abweichende Form auf. Die Zahnköpfe und die Zahnfüße der einzelnen Zähne der Stützverzahnung 15 liegen somit jeweils auf einer von gerade abweichenden Bahn respektive auf einer Kurve. Es versteht sich, dass die Kurven der Zahnköpfe und der Zahnfüße nicht exakt identisch sein müssen. Die Kurve respektive die Kurven sind aus Sicht der zweiten Zahnstange 14 konvex ausgestaltet.

Alternativ lässt sich die von gerade abweichende Form der Stützverzahnung 15 durch die Kurve beschreiben, die durch die Verbindung der Mittenpunkte der Flanken der einzelnen Zähne der Stützverzahnung 15 gebildet ist.

Die Kurve der Mittenpunkte weist eine von gerade abweichende Form auf. Die Kurve der Mittenpunkte weist aus Sicht der zweiten Zahnstange 14 einen konvexen Verlauf auf.

Die Stützverzahnung 18 des Stellelements 16 ist komplementär zu der Stützverzahnung 15 der zweiten Zahnstange 14 ausgeführt, sodass die beiden Stützverzahnungen bei Bewegung der ersten Zahnstange 11 miteinander kämmen. Die Stützverzahnungen 15 und 18 sind dabei so ausgeführt, dass bei Bewegung der ersten Zahnstange 11 in eine Richtung zumindest ein Zahn im Kontakt mit einem jeweiligen Gegenzahn steht. Die Profilüberdeckung des Verzahnungspaares der Stützverzahnungen 15 und 18 ist somit an jeder Stelle größer oder gleich 1.

Mit anderen Worten ist das Stellelement 16 in jeder Position der ersten Zahnstange 11 zwischen der ersten Endposition und der zweiten Endposition zwischen der ersten Zahnstange 11 und der zweiten Zahnstange 14 gelagert.

Eine resultierende Kontaktkraft zwischen der ersten Zahnstange 11 und dem verzahnten Stellelement 16 ist in Richtung einer ersten Kontaktkraftlinie K1 gerichtet. Zwischen der ersten Kontaktkraftlinie K1 und der Bewegungsachse B ist ein Winkel α1 gebildet, der in Abhängigkeit der Position der ersten Zahnstange 11 entlang der Bewegungsachse B variiert.

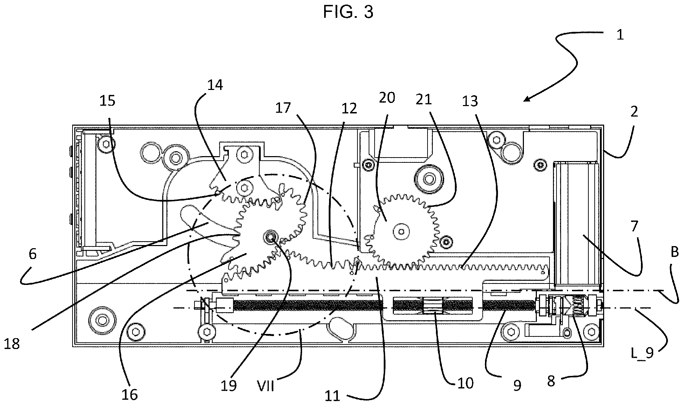

Ein erster Positionsbereich der ersten Zahnstange 11 ist einseitig durch eine Positionierung der ersten Zahnstange 11 in der ersten Endposition begrenzt. Die in den Figuren 2 und 3 gezeigten Positionen der ersten Zahnstange 11 liegen beispielsweise innerhalb des ersten Positionsbereichs. In diesem ersten Positionsbereich nimmt der Winkel α1 zwischen der ersten Kontaktkraftlinie K1 und der Bewegungsachse B mit zunehmender Entfernung der ersten Zahnstange 11 von der ersten Endposition zu. Im vorliegenden Fall ist die Zunahme des Winkels α1 zwischen der ersten Kontaktkraftlinie K1 und der Bewegungsachse B im ersten Positionsbereich progressiv ausgeführt. Es ist aber auch beispielweise eine lineare Zunahme denkbar, je nach gewünschtem Verlauf der Stellspur des Stellelements 16.

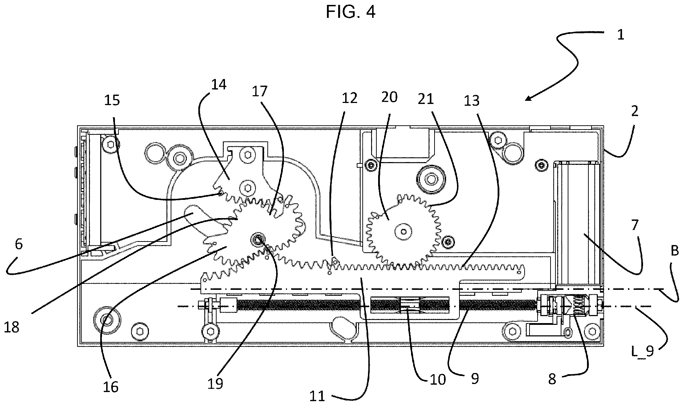

Ein zweiter Positionsbereich der ersten Zahnstange 11 ist in einer Richtung von der ersten Endposition hinzu der zweiten Endposition hinter dem ersten Positionsbereich angeordnet. Die in Figur 4 gezeigte Position der ersten Zahnstange 11 liegt beispielsweise innerhalb des zweiten Positionsbereichs. Der Winkel α1 zwischen der ersten Kontaktkraftlinie K1 und der Bewegungsachse B nimmt in dem zweiten Positionsbereich mit zunehmender Entfernung der ersten Zahnstange 11 von der ersten Endposition ab und wird negativ. Die Abnahme des Winkels α1 zwischen der ersten Kontaktkraftlinie K1 und der Bewegungsachse B im zweiten Positionsbereich ist im vorliegenden Fall degressiv. Es ist aber auch beispielweise eine lineare Abnahme denkbar, je nach gewünschtem Verlauf der Stellspur des Stellelements 16.

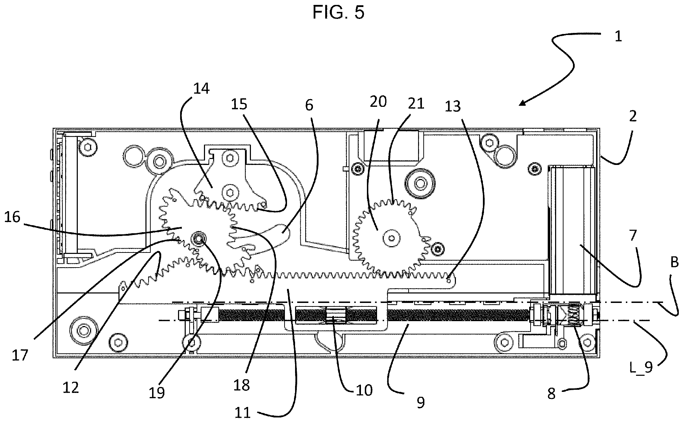

Ein dritter Positionsbereich der ersten Zahnstange 11 ist in einer Richtung von der ersten Endposition hinzu der zweiten Endposition hinter dem zweiten Positionsbereich angeordnet. Die in den Figuren 5 und 6 gezeigte Position der ersten Zahnstange 11 liegt beispielsweise innerhalb des dritten Positionsbereichs. Der Winkel α1 zwischen der ersten Kontaktkraftlinie K1 und der Bewegungsachse B nimmt in dem dritten Positionsbereich mit zunehmender Entfernung der ersten Zahnstange 11 von der ersten Endposition zu und wird positiv. Die Abnahme des Winkels α1 zwischen der ersten Kontaktkraftlinie K1 und der Bewegungsachse B im dritten Positionsbereich kann je nach gewünschtem Verlauf der Stellspur des Stellelements 16 gewählt werden.

Eine resultierende Kontaktkraft zwischen der zweiten Zahnstange 14 und dem verzahnten Stellelement 16 ist in Richtung einer zweiten Kontaktkraftlinie K2 gerichtet. Der Winkel α2 zwischen der zweiten Kontaktkraftlinie K2 und der Bewegungsachse B variiert in Abhängigkeit der Position der ersten Zahnstange 11 entlang der Bewegungsachse B. Der Winkel α2 zwischen der zweiten Kontaktkraftlinie K2 und der Bewegungsachse B nimmt zunehmender Entfernung der ersten Zahnstange 11 von der ersten Endposition zumindest abschnittsweise zu. Die Abnahme des Winkels α2 zwischen der zweiten Kontaktkraftlinie K2 und der Bewegungsachse B ist im vorliegenden Fall progressiv. Es ist aber auch beispielweise eine lineare Zunahme denkbar, je nach gewünschtem Verlauf der Stellspur des Stellelements 16.

Das Stellelement 16 weist einen Verbindungszapfen 19 auf, der sich orthogonal zu der Bewegungsachse B der ersten Zahnstange 11 erstreckt. Bei Bewegung der ersten Zahnstange 11 von der ersten Endposition in Richtung zweiter Endposition wird der Bewegungszapfen 19 entlang einer Stellspur verschoben. Die Stellspur ist dabei von einer Gerade abweichend ausgeführt. Im vorliegenden Fall folgt die Stellspur im Wesentlichen einer Parabel. Es ist beispielsweise aber auch denkbar, dass die Stellspur einer Kreisbahn folgt.

Der Verbindungszapfen 19 ragt durch einen Schlitz 6 in der Rückwand 4 und kann unmittelbar oder mittelbar über den Federkraftspeicher mit dem Stellarm verbindbar sein. Der Schlitz 6 erstreckt sich entlang der Stellspur mit einer Schlitzbreite, die im Wesentlichen dem Durchmesser des Verbindungszapfens 19 entspricht.

Auch in der Vorderwand 3 ist ein Schlitz 5 ausgebildet, der sich entlang der Stellspur erstreckt und in den sich der Verbindungszapfen 19 hineinerstreckt.

### Bezugszeichenliste

- 1: Antriebsvorrichtung
- 2: Gehäuse
- 3: Vorderwand
- 4: Rückwand
- 5: Schlitz
- 6: Schlitz
- 7: Motor
- 8: Winkelgetriebe
- 9: Gewindestange
- 10: Gewindeelement
- 11: Zahnstange
- 12: Bewegungsverzahnung
- 13: Messverzahnung
- 14: Zahnstange
- 15: Stützverzahnung
- 16: Stellelement
- 17: Bewegungsverzahnung
- 18: Stützverzahnung
- 19: Verbindungszapfen
- 20: Messzahnrad
- 21: Messverzahnung

- B: Bewegungsachse
- K: Kraftkontaktlinie
- L: Achse
- α: Winkel

## Patentansprüche

1. Antriebsvorrichtung zum Bewegen eines bewegbaren Teils eines Möbels, umfassend:
ein Gehäuse (2), das mit einem Korpus des Möbels verbindbar ist;
einen Aktuator (7), der mit dem Gehäuse (2) verbunden ist;
eine erste Zahnstange (11), die von dem Aktuator (7) entlang einer Bewegungsachse (B) zwischen einer ersten Endposition und einer zweiten Endposition bewegbar ist;
eine zweite Zahnstange (14), die fest mit dem Gehäuse (2) verbunden ist; und
ein verzahntes Stellelement (16), das mit der ersten Zahnstange (11) und der zweiten Zahnstange (14) in Eingriff steht sowie mit dem bewegbaren Teil des Möbels verbindbar ist.

2. Antriebsvorrichtung nach Anspruch 1,
**dadurch gekennzeichnet,**
**dass** das verzahntes Stellelement (16) zwischen der ersten Zahnstange (11) und der zweiten Zahnstange (14) entlang einer Stellspur bewegbar gelagert ist,
wobei die Stellspur einen von einer Geraden abweichenden Verlauf aufweist.

3. Antriebsvorrichtung nach einem der Ansprüche 1 oder 2,
**dadurch gekennzeichnet,**
**dass** eine resultierende Kontaktkraft zwischen der ersten Zahnstange (11) und dem verzahnten Stellelement (16) in Richtung einer ersten Kontaktkraftlinie (K1) gerichtet ist,
wobei der Winkel (α1) zwischen der ersten Kontaktkraftlinie (K1) und der Bewegungsachse (B) in Abhängigkeit der Position der ersten Zahnstange (11) entlang der Bewegungsachse (B) variiert.

4. Antriebsvorrichtung nach Anspruch 3,
**dadurch gekennzeichnet,**
**dass** ein erster Positionsbereich der ersten Zahnstange (11) einseitig durch eine Positionierung der ersten Zahnstange (11) in der ersten Endposition begrenzt ist, und
**dass** der Winkel (α1) zwischen der ersten Kontaktkraftlinie (K1) und der Bewegungsachse (B) in dem ersten Positionsbereich mit zunehmender Entfernung der ersten Zahnstange (11) von der ersten Endposition zunimmt,
wobei die Zunahme des Winkels (α1) zwischen der ersten Kontaktkraftlinie (K1) und der Bewegungsachse (B) im ersten Positionsbereich insbesondere progressiv ist.

5. Antriebsvorrichtung nach Anspruch 4,
**dadurch gekennzeichnet,**
**dass** ein zweiter Positionsbereich der ersten Zahnstange (11) in einer Richtung von der ersten Endposition hinzu der zweiten Endposition hinter dem ersten Positionsbereich angeordnet ist,
**dass** der Winkel (α1) zwischen der ersten Kontaktkraftlinie (K1) und der Bewegungsachse (B) in dem zweiten Positionsbereich mit zunehmender Entfernung der ersten Zahnstange (11) von der ersten Endposition abnimmt und insbesondere negativ wird,
wobei die Abnahme des Winkels (α1) zwischen der ersten Kontaktkraftlinie (K1) und der Bewegungsachse (B) im zweiten Positionsbereich insbesondere degressiv ist.

6. Antriebsvorrichtung nach einem der Ansprühe 1 bis 5,
**dadurch gekennzeichnet,**
**dass** ein Messzahnrad (20) drehbar an dem Gehäuse (2) gelagert ist und mit einem Messabschnitt (13) der ersten Zahnstange (11) in Eingriff ist,
**dass** der Messabschnitt (13) als gerade Zahnstange ausgeführt ist, und
**dass** das Messzahnrad (20) einen konstanten Grundkreisdurchmesser aufweist,
wobei das Messzahnrad (20) zur Erfassung der Position der ersten Zahnstange (11) ausgestaltet ist.

7. Antriebsvorrichtung nach einem der Ansprüche 1 bis 6,
**dadurch gekennzeichnet,**
**dass** eine Gewindestange (9) von dem Aktuator (7) um eine Rotationsachse (L_9) drehbar ist, und
**dass** ein Gewindeelement (10) mit einem Gegengewinde in ein Gewinde der Gewindestange (9) eingreift, sodass bei Drehung der Gewindestange (9) das Gewindeelement (10) entlang der Bewegungsachse (B) verschoben wird,
wobei das Gewindeelement (10) mit der ersten Zahnstange (11) fest verbunden ist.

8. Antriebsvorrichtung nach einem der Ansprüche 1 bis 7,
**dadurch gekennzeichnet,**
**dass** eine resultierende Kontaktkraft zwischen der zweiten Zahnstange (14) und dem verzahnten Stellelement (16) in Richtung einer zweiten Kontaktkraftlinie (K2) gerichtet ist,
wobei der Winkel (α2) zwischen der zweiten Kontaktkraftlinie (K2) und der Bewegungsachse (B) in Abhängigkeit der Position der ersten Zahnstange (11) entlang der Bewegungsachse (B) variiert.

9. Antriebsvorrichtung nach Anspruch 8,
**dadurch gekennzeichnet,**
**dass** der Winkel (α2) zwischen der zweiten Kontaktkraftlinie (K2) und der Bewegungsachse (B) mit zunehmender Entfernung der ersten Zahnstange (11) von der ersten Endposition zumindest abschnittsweise zunimmt,
wobei die Abnahme des Winkels (α2) zwischen der zweiten Kontaktkraftlinie (K2) und der Bewegungsachse (B) im dritten Positionsbereich insbesondere progressiv ist.

10. Antriebsvorrichtung nach einem der Ansprüche 1 bis 9,
**dadurch gekennzeichnet,**
**dass** das verzahnte Stellelement (16) einen ersten verzahnten Außenkonturabschnitt (17) und einen zweiten verzahnten Außenkonturabschnitt (18) aufweist,
wobei das verzahnte Stellelement (16) über den ersten verzahnten Außenkonturabschnitt (17) mit der ersten Zahnstange (11) und über den zweiten verzahnten Außenkonturabschnitt (18) mit der zweiten Zahnstange (14) in Eingriff ist.

11. Antriebsvorrichtung nach Anspruch 10,
**dadurch gekennzeichnet,**
**dass** das verzahnte Stellelement (16) einen Verbindungszapfen (19) aufweist, der sich quer, insbesondere orthogonal, zu der Bewegungsachse (B) erstreckt und über den das verzahntes Stellelement (16) mit dem bewegbaren Teil des Möbels verbindbar ist,
wobei der Verbindungszapfen (19) insbesondere in einem Schlitz (5, 6) des Gehäuses (2) geführt ist.

12. Antriebsvorrichtung nach Anspruch 11,
**dadurch gekennzeichnet,**
**dass** sich bei Bewegung der ersten Zahnstange (11) entlang der Bewegungsachse (B) zwischen einer ersten Endposition und einer zweiten Endposition der Verbindungszapfen (19) entlang der Stellspur bewegt.

13. Möbel, umfassend:
einen Korpus,
ein relativ zu dem Korpus bewegbares Teil,
einen Stellarm, und
eine Antriebsvorrichtung nach einem der Ansprüche 1 bis 12,
wobei das Gehäuse (2) mit dem Korpus verbunden ist; und
das verzahnte Stellelement (16) über den Stellarm mit dem bewegbaren Teil verbunden ist.

## Claims

1. A drive device for moving a movable part of a piece of furniture, comprising:
a housing (2) that can be connected to a body of the furniture;
an actuator (7), which is connected to the housing (2);
a first toothed rack (11), which can be moved by the actuator (7) along an axis of movement (B) between a first end position and a second end position;
a second toothed rack (14) which is firmly connected to the housing (2); and
a toothed actuating element (16) which engages with the first toothed rack (11) and the second toothed rack (14) and can be connected to the movable part of the furniture.

2. Drive device according to claim 1,
**characterized in**
**that** the toothed actuating element (16) is mounted between the first toothed rack (11) and the second toothed rack (14) so as to be movable along an actuating track,
wherein the actuating track has a course that deviates from a straight line.

3. Drive device according to one of claims 1 or 2,
**characterized in**
**that** a resulting contact force between the first toothed rack (11) and the toothed actuating element (16) is orientated in the direction of a first contact force line (K1),
wherein the angle (α1) between the first contact force line (K1) and the axis of movement (B) varies depending on the position of the first toothed rack (11) along the axis of movement (B).

4. Drive device according to claim 3,
**characterized in**
**that** a first position range of the first toothed rack (11) is limited on one side by a positioning of the first toothed rack (11) in the first end position, and
**that** the angle (α1) between the first contact force line (K1) and the axis of movement (B) in the first position range increases with increasing distance of the first toothed rack (11) from the first end position,
wherein the increase in the angle (α1) between the first contact force line (K1) and the axis of movement (B) is particularly progressive in the first position range.

5. Drive device according to claim 4,
**characterized in**
**that** a second position region of the first toothed rack (11) is arranged behind the first position region in a direction from the first end position towards the second end position,
**that** the angle (α1) between the first contact force line (K1) and the axis of movement (B) in the second position range decreases and particularly becomes negative with increasing distance of the first toothed rack (11) from the first end position,
wherein the decrease in the angle (α1) between the first contact force line (K1) and the axis of movement (B) is particularly degressive in the second position range.

6. Drive device according to one of claims 1 to 5,
**characterized in**
**that** a measuring gear (20) is rotatably mounted on the housing (2) and engages with a measuring section (13) of the first toothed rack (11),
**that** the measuring section (13) is designed as a straight toothed rack, and
**that** the measuring gear (20) has a constant base circle diameter,
wherein the measuring gear (20) is designed to detect the position of the first toothed rack (11).

7. Drive device according to one of claims 1 to 6,
**characterized in**
**that** a threaded rod (9) of the actuator (7) is rotatable about an axis of rotation (L_9), and
**that** a threaded element (10) with a mating thread engages in a thread of the threaded rod (9) so that the threaded element (10) is displaced along the axis of movement (B) when the threaded rod (9) is rotated,
wherein the threaded element (10) is firmly connected to the first toothed rack (11).

8. Drive device according to one of claims 1 to 7,
**characterized in**
**that** a resulting contact force between the second toothed rack (14) and the toothed actuating element (16) is orientated in the direction of a second contact force line (K2),
wherein the angle (α2) between the second contact force line (K2) and the axis of movement (B) varies depending on the position of the first toothed rack (11) along the axis of movement (B).

9. Drive device according to claim 8,
**characterized in**
**that** the angle (α2) between the second contact force line (K2) and the axis of movement (B) increases at least in sections as the distance of the first toothed rack (11) from the first end position increases,
wherein the decrease in the angle (α2) between the second contact force line (K2) and the axis of movement (B) is particularly progressive in the third position range.

10. Drive device according to one of claims 1 to 9,
**characterized in**
**that** the toothed actuating element (16) has a first toothed outer contour section (17) and a second toothed outer contour section (18),
wherein the toothed actuating element (16) engages with the first toothed rack (11) via the first toothed outer contour section (17) and with the second toothed rack (14) via the second toothed outer contour section (18).

11. Drive device according to claim 10,
**characterized in**
**that** the toothed actuating element (16) has a connecting pin (19) which extends transversely, in particular orthogonally, to the axis of movement (B) and via which the toothed actuating element (16) can be connected to the movable part of the furniture,
wherein the connecting pin (19) is guided in particular in a slot (5, 6) of the housing (2).

12. Drive device according to claim 11,
**characterized in**
**that** when the first toothed rack (11) moves along the axis of movement (B) between a first end position and a second end position, the connecting pin (19) moves along the adjustment track.

13. Furniture comprising:
a body,
a part that can be moved relative to the body,
a actuating arm, and
a drive device according to one of claims 1 to 12,
wherein the housing (2) is connected to the body; and
the toothed actuating element (16) is connected to the movable part via the actuating arm.

## Revendications

1. Dispositif d'entraînement pour déplacer une partie mobile d'un meuble, comprenant :
un boîtier (2), qui peut être relié à un corps du meuble,
un actionneur (7), qui est relié au boîtier (2),
une première crémaillère (11), qui peut être déplacée par l'actionneur (7) le long d'un axe de déplacement (B) entre une première position finale et une deuxième position finale,
une deuxième crémaillère (14), qui est reliée fermement au boîtier (2), et
un élément de réglage denté (16), qui est en prise avec la première crémaillère (11) et la deuxième crémaillère (14) et peut être relié à la partie mobile du meuble.

2. Dispositif d'entraînement selon la revendication 1,
**caractérisé en ce qu'**
l'élément de réglage denté (16) est logé mobile le long d'une course de réglage entre la première crémaillère (11) et la deuxième crémaillère (14),
sachant que la course de réglage comporte un tracé s'écartant d'une droite.

3. Dispositif d'entraînement selon l'une quelconque des revendications 1 ou 2,
**caractérisé en ce qu'**
une force de contact résultante entre la première crémaillère (11) et l'élément de réglage dentée (16) est dirigée en direction d'une première ligne de force de contact (K1),
sachant que l'angle (α1) varie le long de l'axe de déplacement (B) entre la première ligne de force de contact (K1) et l'axe de déplacement (B) en fonction de la position de la première crémaillère (11).

4. Dispositif d'entraînement selon la revendication 3,
**caractérisé en ce qu'**
une première zone de positionnement de la première crémaillère (11) est limitée unilatéralement par un positionnement de la première crémaillère (11) dans la première position finale, et
**en ce que** l'angle (α1) augmente dans la première zone de positionnement entre la première ligne de force de contact (K1) et l'axe de déplacement (B) avec un éloignement croissant de la première crémaillère (11) de la première position finale,
sachant que l'augmentation de l'angle (α1) entre la première ligne de force de contact (K1) et l'axe de déplacement (B) est en particulier progressive dans la première zone de positionnement.

5. Dispositif d'entraînement selon la revendication 4,
**caractérisé en ce qu'**
une deuxième zone de positionnement de la première crémaillère (11) est disposée dans une direction de la première position finale vers la deuxième position finale derrière la première zone de positionnement,
**en ce que** l'angle (α1) diminue dans la deuxième zone de positionnement entre la première ligne de force de contact (K1) et l'axe de déplacement (B) avec un éloignement croissant de la première crémaillère (11) de la première position finale et est en particulier négatif,
sachant que la diminution de l'angle (α1) entre la première ligne de force de contact (K1) et l'axe de déplacement (B) est en particulier dégressive dans la deuxième zone de positionnement.

6. Dispositif d'entraînement selon l'une quelconque des revendications 1 à 5,
**caractérisé en ce qu'**
un engrenage de mesure (20) est logé sur le boîtier (2) pouvant tourner et est en prise avec une section de mesure (13) de la première crémaillère (11),
**en ce que** la section de mesure (13) est exécutée sous la forme d'une crémaillère droite, et
**en ce que** l'engrenage de mesure (20) comporte un diamètre de base constant,
sachant que l'engrenage de mesure (20) est conçu pour saisir la position de la première crémaillère (11).

7. Dispositif d'entraînement selon l'une quelconque des revendications 1 à 6,
**caractérisé en ce qu'**
une tige filetée (9) peut être tournée par l'actionneur (7) autour d'un axe de rotation (L_9), et
**en ce qu'**un élément fileté (10) vient en prise avec un contre-filetage dans un filetage de la tige filetée (9) de telle manière que l'élément fileté (10) est déplacé lors de la rotation de la tige filetée (9) le long de l'axe de déplacement (B),
sachant que l'élément fileté (10) est fermement relié à la première crémaillère (11).

8. Dispositif d'entraînement selon l'une quelconque des revendications 1 à 7,
**caractérisé en ce qu'**
une force de contact résultante entre la deuxième crémaillère (14) et l'élément de réglage dentée (16) est dirigée en direction d'une deuxième ligne de force de contact (K2),
sachant que l'angle (α2) varie le long de l'axe de déplacement (B) entre la deuxième ligne de force de contact (K2) et l'axe de déplacement (B) en fonction de la position de la première crémaillère (11).

9. Dispositif d'entraînement selon la revendication 8,
**caractérisé en ce que**
l'angle (α2) augmente au moins par endroits entre la deuxième ligne de force de contact (K2) et l'axe de déplacement (B) avec un éloignement croissant de la première crémaillère (11) de la première position finale,
sachant que la diminution de l'angle (α2) entre la deuxième ligne de force de contact (K2) et l'axe de déplacement (B) est en particulier progressive dans la troisième zone de positionnement.

10. Dispositif d'entraînement selon l'une quelconque des revendications 1 à 9,
**caractérisé en ce que**
l'élément de réglage denté (16) comporte une première section profilée extérieure dentée (17) et une deuxième section profilée extérieure dentée (18),
sachant que l'élément de réglage denté (16) est en prise avec la première crémaillère (11) par le biais de la première section profilée extérieure dentée (17) et avec la deuxième crémaillère (14) par le biais de la deuxième section profilée extérieure dentée (18).

11. Dispositif d'entraînement selon la revendication 10,
**caractérisé en ce que**
l'élément de réglage denté (16) comporte un pivot de liaison (19), qui s'étend transversalement, en particulier de façon orthogonale, à l'axe de déplacement (B) et par lequel l'élément de réglage denté (16) peut être relié à la partie mobile du meuble,
sachant que le pivot de liaison (19) est guidé en particulier dans une fente (5, 6) du boîtier (2).

12. Dispositif d'entraînement selon la revendication 11,
**caractérisé en ce que**
le pivot de liaison (19) se déplace le long de la course de réglage lors du déplacement de la première crémaillère (11) le long de l'axe de déplacement (B) entre une première position finale et une deuxième position finale.

13. Meuble, comprenant :
un corps,
une partie mobile par rapport au corps,
un bras de réglage, et
un dispositif d'entraînement selon l'une quelconque des revendications 1 à 12,
sachant que le boîtier (2) est relié au corps, et
l'élément de réglage denté (16) est relié par le bras de réglage à la parie mobile.
